# EUROPÄISCHE PATENTSCHRIFT

(11) **EP 4 305 942 B1**
(45) Veröffentlichungstag und Bekanntmachung des Hinweises auf die Patenterteilung: **29.01.2025**
(21) Anmeldenummer: 22184396.4
(22) Anmeldetag: 12.07.2022
(51) Int. Cl.: A01C 7/04, A01C 15/00

(54) **SÄHERZ MIT RÜHRWELLE FÜR EINE SÄMASCHINE**
SOWING CORE WITH STIRRER FOR A SOWING MACHINE
DISTRIBUTEUR AVEC AGITATEUR POUR SEMOIR

(43) Veröffentlichungstag der Anmeldung: 17.01.2024
(73) Patentinhaber: Kverneland Group Soest GmbH, 59494 Soest (DE)
(72) Erfinder: Korn, Karl-Ulrich, 59494 Soest (DE)
(74) Vertreter: Bittner, Thomas L.

(56) Entgegenhaltungen:
- EP-A1- 3 735 813
- US-A- 4 469 244

## Beschreibung

Die Erfindung betrifft ein Säherz für eine Sämaschine, insbesondere eine Einzelkornsämaschine.

### Hintergrund

Sämaschinen können eingerichtet sein, Saatkörner vereinzelt und beabstandet in den Boden einzubringen. Die Vereinzelung der in einem Reservoir bereitgestellten Saatkörner wird in einem Säherz ausgeführt, um dann die vereinzelten Saatkörner im Boden einzubringen.

Im Dokument EP 2 939 511 B1 ist ein Säherz für eine Einzelkornsämaschine offenbart, welches einen in einer Rotationsrichtung rotierbare Säscheibe mit einer Vielzahl von konzentrisch zur Säscheibe entlang mindestens eines Sälochkreises verteilten Sälöchern und mindestens eine in einem Aufnahmeabschnitt zur Aufnahme des Saatguts an den Sälöchern der Säscheibe angeordnete Rührwelle zur Bewegung des Saatguts aufweist. Die Rührwelle ist modular austauschbar gebildet, was die Verwendung unterschiedlicher Rührwellen ermöglicht.

Das Dokument US 4 469 244 A betrifft einen Saugverteiler für eine Einzelkorn-Sämaschine mit rotierender Lochscheibe.

### Zusammenfassung

Aufgabe der Erfindung ist es, ein Säherz für eine Sämaschine anzugeben, bei dem eine Rührwelle zum Bewegen des Saatguts im Säherz auf verbessere Art und Weise betrieben werden kann.

Zur Lösung ist ein Säherz für eine Sämaschine nach dem unabhängigen Anspruch 1 geschaffen. Ausgestaltungen sind Gegenstand von abhängigen Unteransprüchen.

Nach einem Aspekt ist ein Säherz für eine Sämaschine geschaffen, welches folgendes ausweist: ein Gehäuse; eine Antriebswelle; eine Säscheibe zum Vereinzeln von Saatkörnern, die in dem Gehäuse angeordnet und eine mittels der Antriebswelle angetriebene Rotation ausführen kann, wobei die Säscheibe eine Anordnung von Saatkornlöchern aufweist, die um einen mittleren Scheibenabschnitt der Säscheibe, welcher der Antriebswelle gegenüberliegend angeordnet oder mit dieser verbunden ist, im Wesentlichen konzentrisch und zumindest teilweise umlaufend sowie hiervon beabstandet gebildet ist; eine Rührwelle, die in dem Gehäuse angeordnet ist und eine Anordnung von Rühr- und / oder Förderelementen aufweist, welche beim Rotieren der Säscheibe und der Rührwelle zumindest einen Säscheibenabschnitt mit den Saatkornlöchern und / oder einen Säscheibenabschnitt benachbart zu den Saatkornlöchern erfassen; und eine der Rührwelle zugeordnete Abgriff- und Antriebseinrichtung, die in dem Gehäuse angeordnet und eingerichtet ist, auf einer Flachseite der Säscheibe in einem Säscheibenabschnitt außerhalb des mittleren Scheibenabschnitts und beabstandet von der Antriebswelle sowie außerhalb eines Säscheibenabschnitts mit der Anordnung von Saatkornlöchern mittels eines Abgriffs eine Antriebskraft an der rotierenden Säscheibe abzugreifen und die Rührwelle mittels der abgegriffenen Antriebskraft zu rotieren.

Die der Rührwelle zugeordnete Abgriff- und Antriebseinrichtung ermöglicht ein effizientes Abgreifen der Antriebskraft auf der Flachseite der Säscheibe, im Unterschied zum Stand der Technik, getrennt und beabstandet von der Antriebswelle der Säscheibe. Auf diese Weise ist das Abgreifen der Antriebskraft unabhängig von einem direkten Zusammenwirken mit der Antriebswelle der Säscheibe ermöglicht, was eine flexible Ausgestaltung des Abgreifens der Antriebskraft für unterschiedliche Anwendungsszenarien unterstützt.

Die Säherz kann zum Beispiel zur Verwendung in einer Einzelkornsämaschine oder einer Säreihe eingerichtet sein.

Zum Abgreifen der Antriebskraft kann an der rotierenden Säscheibe eine kraftschlüssige Verbindung zwischen der Säscheibe und der Abgriff- und Antriebseinrichtung ausgebildet sein. Bei einer kraftschlüssigen Verbindung wird ein zu übertragendes Drehmoment beziehungsweise ein Axialgraph nur über Reibung der zu verbindenden Bauteile übertragen. Daher ist mit einer kraftschlüssigen Verbindung regelmäßig gleichzeitig auch eine breitschlüssige Verbindung gebildet.

Auf diese Weise ist die Wahrscheinlichkeit für eine Beschädigung der Rührwelle und / oder der Abgriff- und Antriebseinrichtung vermieden, wenn die Rührwelle sich beispielsweise aufgrund einer erhöhten Ansammlung von Saatkörnern kaum oder gar nicht mehr drehen kann. Im Fall des Überschreitens der Schwellwertkraft kann beispielsweise der Abgriff der Abgriff- und Antriebseinrichtung auf der Säscheibe rutschen oder gleiten. Hierzu kann vorgesehen sein, den Abgriff im Bereich einer Oberfläche, die mit der Säscheibe in Kontakt kommt, aus einem Gummi- oder einem Kunststoffmaterial auszubilden.

Die Abgriff- und Antriebseinrichtung kann einen Überlastschutz aufweisen, derart, dass die kraftschlüssige Verbindung zwischen der Säscheibe und der Abgriff- und Antriebseinrichtung unterbrochen wird, wenn eine der Rotation der Rührwelle entgegenwirkende Gegenkraft eine Schwellwertkraft überschreitet.

Die Abgriff- und Antriebseinrichtung kann ein Reibrad aufweisen, welches beim Abgreifen der Antriebskraft an der rotierenden Säscheibe mit dieser reibschlüssig verbunden wird. Das Reibrad kann entlang seiner umlaufenden Oberfläche, die beim Abgreifen der Antriebskraft mit der Säscheibe in Kontakt ist, eine glatte oder oberflächenstrukturierte Lauffläche aufweisen. Auch eine Kombination von glatten und oberflächenstrukturierten Abschnitten kann vorgesehen sein. Mit dem Reibrad ist der Abgriff bereitgestellt. Zumindest im Bereich der Lauffläche kann das Reibrad aus einem Gummi- oder Kunststoffmaterial sein.

Wird der Rotation der Rührwelle eine Gegenkraft entgegengesetzt, zum Beispiel wegen einer Ansammlung von Saatkörnern im Bereich der Rührwelle, kann das Reibrad ggf. auf der Säscheibe rutschen oder gleiten, insbesondere dann, wenn die Gegenkraft einen Schwellwert überschreitet. Hierdurch ist ein Überlastschutz gebildet.

Der Abgriff kann mit einem Abgriffelement gebildet sein, wobei dem Abgriffelement eine Anpresseinrichtung zugeordnet ist, die eingerichtet ist, das Abgriffelement mit einem Anpressdruck gegen die Säscheibe zu beaufschlagen. In einer Ausgestaltung weist das Abgriffelement das Reibrad auf, welches drehfest auf einer Welle der Rührwelle angeordnet ist.

Der Anpressdruck kann mittels der Anpresseinrichtung einstellbar sein. Auf diese Weise ist insbesondere einstellbar, bei welchem Schwellwert das Abgriffelement beginnt, auf der Säscheibe zu rutschen oder zu gleiten, wenn die Rotation der Rührwelle behindert wird.

Das Abgriffelement kann an der Anpresseinrichtung federgelagert aufgenommen sein. Beispielsweise kann ein Federelement vorgesehen sein, welches eingerichtet ist, den Anpressdruck für das Abgriffelement bereitzustellen. In einer Ausgestaltung kann eine Spiralfeder als Federelement eingesetzt werden, sei es als Druck- oder Zugfeder.

Der Abgriff ist zum Einstellen einer Rotationsgeschwindigkeit der Rührwelle relativ zur Säscheibe in Bezug auf die Antriebswelle in radialer Richtung verlagerbar. Mittels der Verlagerung des Abgriffs in radialer Richtung verändert sich der Durchmesser des Kreises, entlang welchen sich der Abgriff beim Drehen der Säscheibe um die Antriebswelle der Säscheibe herumbewegt. Hierbei kann vorgesehen sein, dass bei der Verlagerung des Abgriffs die radiale Position der Rührelemente in Bezug auf die Antriebswelle der Säscheibe im Wesentlichen unverändert bleibt. Insbesondere kann die Anordnung von Rühr- und / oder Förderelementen hierbei im Bereich der Saatkornlöcher und / oder benachbart hierzu verbleiben.

Der Abgriff kann für eine Umkehr einer Rotationsrichtung der Rührwelle in Bezug auf die Antriebswelle in einer ersten Stellung auf einer Seite beabstandet von der Antriebswelle und in einer zweiten Stellung, die von der ersten Stellung verschieden ist, auf einer gegenüberliegenden Seite beabstandet von der Antriebswelle anordenbar sein. Bei dieser Ausgestaltung wechselt der Abgriff in Bezug auf die Antriebswelle der Säscheibe von einer Seite auf die gegenüberliegende Seite, so dass es zur Umkehr der Drehrichtung der Rotation der Rührwelle kommt. Auch auf der gegenüberliegenden Seite kann vorgesehen sein, dass der Abgriff in Bezug auf die Antriebswelle in verschiedene Stellungen in Radialrichtung verlagerbar ist.

Die Anordnung von Rühr- und / oder Förderelementen kann auf der Rührwelle in axialer Richtung verlagerbar sein. Auf diese Weise kann die Anordnung von Rühr- und / oder Förderelementen entlang der Radialrichtung der Säscheibe hinsichtlich ihrer relativen Position zu den Saatkornlöchern verstellt werden. Bei einer solchen Verlagerung kann die Position des Abgriffs an der Säscheibe seinerseits unverändert verbleiben.

Zwischen der Säscheibe und der Abgriff- und Antriebseinrichtung kann ein direkter Kontakt ausgebildet sein. Bei dieser Ausgestaltung steht beispielsweise das Abgriffelement in direktem Kontakt mit der Oberfläche auf der Flachseite der Säscheibe.

Auf der Flachseite der Säscheibe kann eine Rührscheibe angeordnet sein, und zwischen der Säscheibe und der Abgriff- und Antriebseinrichtung kann ein indirekter Kontakt über die Rührscheibe ausgebildet sein. Die Rührscheibe ist eingerichtet, die Saatkörner im Gehäuse zu bewegen oder zu rühren. Zu diesem Zweck kann die Rührscheibe umlaufend durchgehend oder unterbrochen Rührelemente aufweisen, beispielsweise Vorsprünge. Der Abgriff ist in direkten Kontakt mit der Rührscheibe, mit der Säscheibe aber nur in indirektem Kontakt über die Rührscheibe.

Alternativ oder ergänzend kann auf der Flachseite der Säscheibe zwischen der Säscheibe und der Abgriff- und Antriebseinrichtung aufgrund eines anderen Elements, welches an der Säscheibe angeordnet ist, ein indirekter Kontakt über dieses Element ausgebildet sein

Die Rührwelle kann in dem Gehäuse in einem Aufnahmeabschnitt oder benachbart hierzu angeordnet sein, wobei im Aufnahmebereich zum Aufnehmen der Saatkörner an den Saatkornlöchern eine Über- oder Unterdruckumgebung ausgebildet wird. Mithilfe der Über- oder Unterdruckumgebung, insbesondere im Bereich der Saatkornlöcher wird das Aufnehmen vereinzelter Saatkörner an den Saatkornlöchern erreicht. Verschiedene Ausführungsformen zum Ausbilden der Über- oder Unterdruckumgebung sind als solche bekannt.

Die Rührwelle kann in dem Gehäuse austauschbar angeordnet sein. Dies ermöglicht es, die Rührwelle auszutauschen beispielsweise zu Reparatur- oder Wartungszwecken. Aber auch ein Austausch von Rührwellen mit unterschiedlichen Anordnungen von Rühr- und / oder Förderelementen ist so ermöglicht.

Die Rühr- und / oder Förderelemente der Anordnung von Rühr- und / oder Förderelementen können wenigstens einer der folgenden Bauarten entsprechend ausgeführt sein: biegesteife Rührelemente, elastisch verformbare Rührelemente und FörderelementE wie Förderschnecke. Biegesteife Rührelemente können mit biegesteifen Vorsprüngen auf der umlaufenden Oberfläche der Rührwelle ausgebildet sein. Elastisch verformbare Rührelemente können beispielsweise Bürstenelemente umfassen. Mithilfe des oder der Förderelemente können die Saatkörner aus einem räumlichen Bereich im Gehäuse zu einem anderen räumlichen Bereich hin gefördert werden, zum Beispiel zum Aufnahmebereich hin, wobei eine Förderrichtung mittels Umkehr der Drehrichtung der Rührwelle umkehrbar ist.

In einer Ausgestaltung kann die Rührwelle in dem Gehäuse zwischen einer Arbeitsstellung, in welcher der Abgriff die Antriebskraft von der Säscheibe abgreift und einer Nichtarbeitsstellung verlagerbar sein, in welcher der Abgriff von der Säscheibe beabstandet ist, die Drehung der Säscheibe also keine Rotation der Rührwelle bewirkt, weil kein Abgriff der Antriebsbewegung stattfindet. Die Rührwelle kann hierbei beispielweise zwischen den unterschiedlichen Stellungen im Gehäuse verschwenkt werden.

Es kann vorgesehen sein, in dem Gehäuse eine weitere Rührwelle anzuordnen, zum Beispiel benachbart zu Rührwelle, wobei die weitere Rührwelle konstruktiv und funktionell vergleichbar der Rührwelle ausgeführt ist.

Bei dem zu vereinzelnden Saatkorn kann es sich um unbehandelte oder behandelte Saatkörner handeln. Saatkörner können neben dem eigentlichen ergänzende Bestandteile enthalten, zum Beispiel einen Herbizidzusatz.

### Beschreibung von Ausführungsbeispielen

Im Folgenden werden weitere Ausführungsbeispiele unter Bezugnahme auf Figuren einer Zeichnung näher erläutert. Hierbei zeigen:
- Fig. 1: perspektivische Darstellungen eines Säherzens mit geschlossenem Gehäuse;
- Fig. 2: Darstellungen einer Gehäusehälfte des Säherzens aus Fig. 1 mit einer Rührwelle;
- Fig. 3: Darstellungen einer zugeordneten Gehäusehälfte des Säherzens aus Fig. 1 mit der Rührwelle;
- Fig. 4: Darstellungen einer Gehäusehälfte des Säherzens aus Fig. 1 mit einer anderen Rührwelle und
- Fig. 5: Darstellungen einer zugeordneten Gehäusehälfte des Säherzens aus Fig. 1 mit der anderen Rührwelle gemäß Fig. 4.

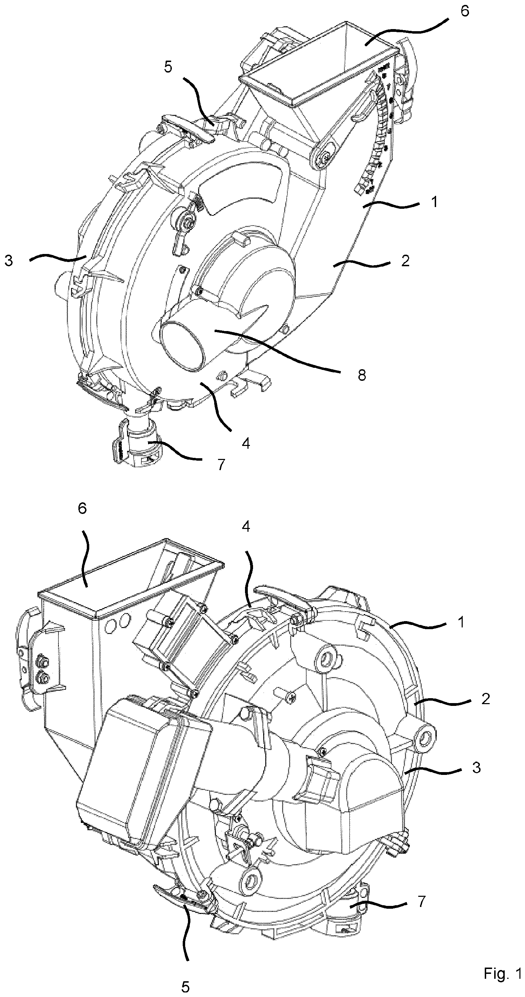

Fig. 1 zeigt perspektivische Darstellungen eines Säherzens 1, welches mit einem Gehäuse 2 gebildet ist, dass eine Gehäusehälfte 3 und eine zugeordnete Gehäusehälfte 4 aufweist, die zum Ausbilden des geschlossenen Zustands des Gehäuses 2 nach Fig. 1 mithilfe einer Verbindungseinrichtung 5 lösbar verbunden sind. Das Säherz 1 ist konfiguriert, Saatkörner, die über eine Zuführkanal 6 in dem Gehäuse 2 eingebracht werden, zu vereinzeln und dann über einen Gehäuseausgang 7 vereinzelt auszubringen, beispielsweise über ein nach unter zum Boden gerichtetes Schussrohr (nicht dargestellt), welches an dem Gehäuseausgang 7 angeschlossen werden kann.

Über eine Pneumatikanschluss 8 wird eine in dem Gehäuse 2 angeordnete Vereinzelungseinrichtung zum Vereinzeln der Saatkörner mit Luft versorgt, wie dies an sich für Säherzen von Sämaschinen bekannt ist, zum Beispiel Einzelkornmaschinen.

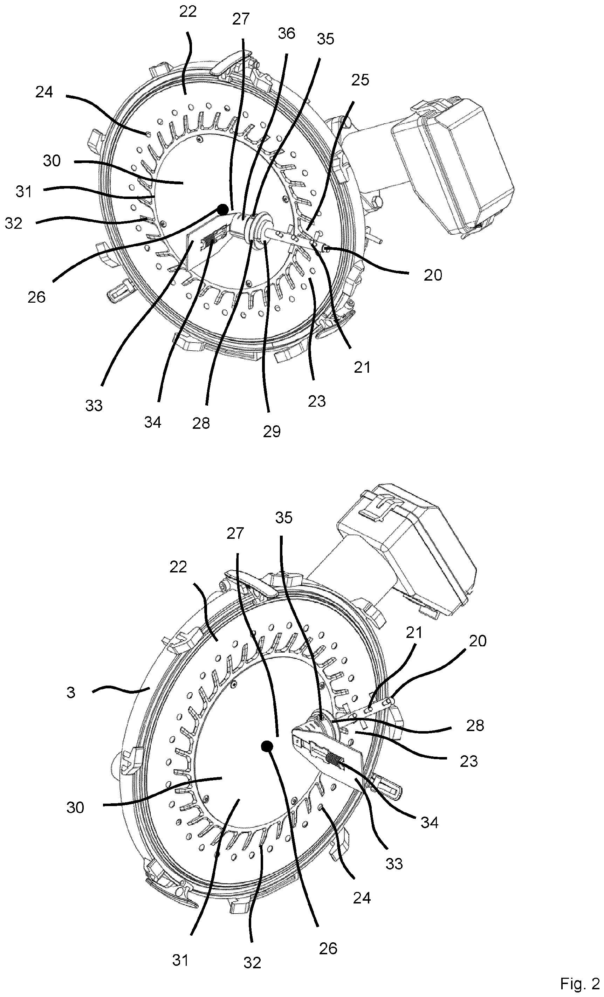

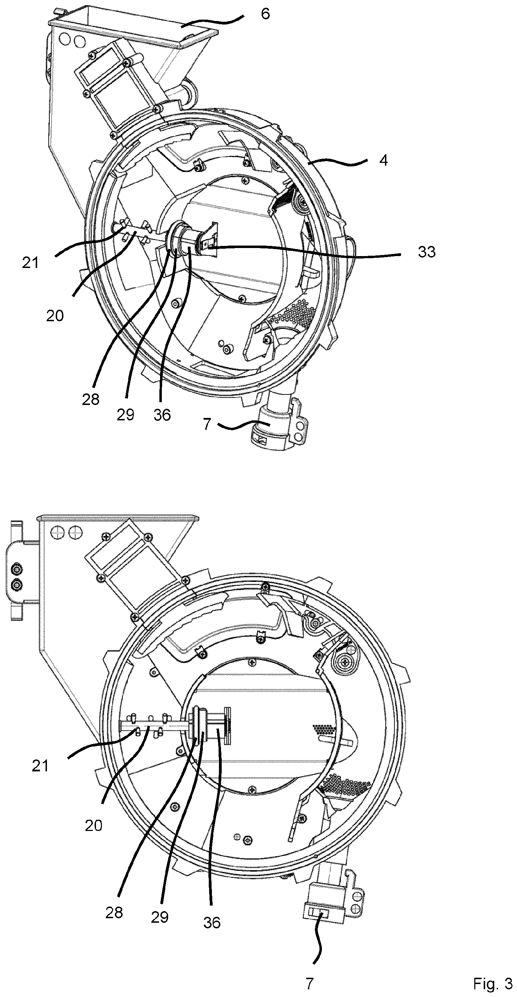

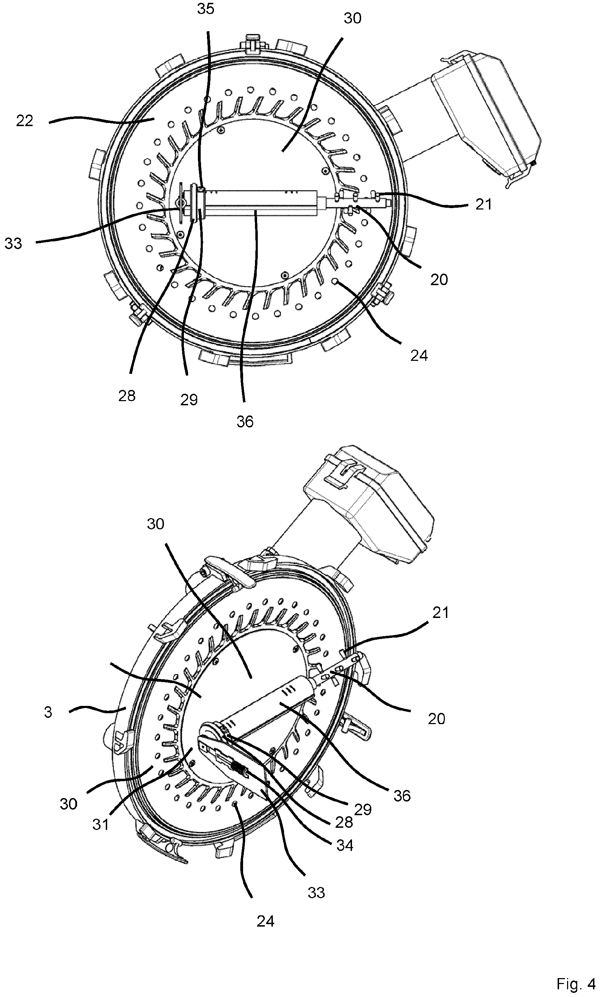

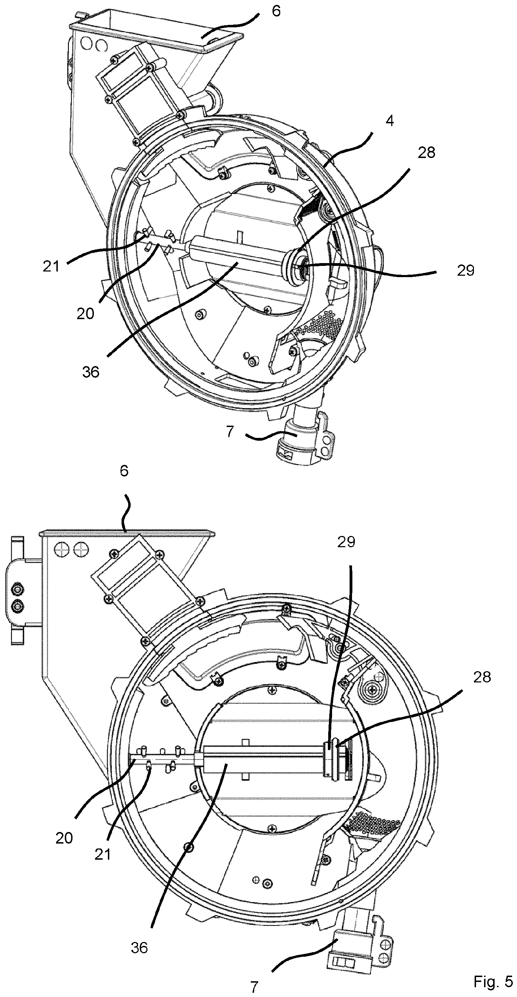

Die Fig. 2 bis 5 zeigen jeweils Darstellungen der Gehäusehälfte 3 oder der zugeordneten Gehäusehälfte 4, wobei das Gehäuse 2 im geöffneten Zustand dargestellt ist. Die Ausführungsform in den Fig. 2 und 3 einerseits und die andere Ausführungsform in den Fig. 4 und 5 andererseits weisen eine unterschiedlich ausgestaltete Rührwelle 20 auf. Die Rührwelle 20 ist mit einer Anordnung von Rühr- und / oder Förderelementen 21 gebildet, welche die beispielhaft gezeigten Rührelemente sowie ergänzend oder alternativ ein oder mehrere Förderelemente aufweisen kann, die eingerichtet sind, die Saatkörner zu fördern, insbesondere in einer Förderrichtung, die im Wesentlichen in axialer Richtung der Rührwelle 20 verläuft. Zum Beispiel kann hierzu eine Förderschnecke vorgesehen sein.

Die Anordnung von Rühr- und / oder Förderelementen 21 ist gegenüber einer Säscheibe 22 in einem Säscheibenabschnitt 23 angeordnet, in welchem die Säscheibe 22 mit einer umlaufenden, insbesondere kreisförmigen Anordnung von Saatlochkörnern 24 gebildet ist, die dazu dienen, in dem Gehäuse 2 eingebrachte Saatkörner vereinzelt an den Saatkornlöchern 24 aufzunehmen, insbesondere in einem Aufnahmebereich 25 in dem Gehäuse 2, in welchem auch die Rührwelle 20 angeordnet ist.

In Betrieb, wenn sich die Säscheibe 22 aufgrund des Antriebs durch eine Antriebswelle 26, die in einem mittleren Bereich 27 an die Säscheibe 22 koppelt, dreht, rotiert auch die Rührwelle 20. Die Antriebswelle 26 kann direkt mit der Säscheibe verbunden sein. Alternativ kann die Antriebswelle 27 indirekt mit der Säscheibe verbunden sein, zum Beispiel über ein Trommel, die drehfest mit der Antriebswelle 26 verbunden ist und an der die Säscheibe 22 angeordnet ist, so dass sich die Säscheibe 22 aufgrund der Drehung der Trommel dreht, welche ihrerseits von der Antriebswelle 26 getrieben dreht. In diesem Fall ist der mittlere Bereich 27 der Antriebswelle gegenüberliegend angeordnet.

Die Drehung der Rührwelle 20 erfolgt aufgrund einer Antriebskraft, die mithilfe eines einen Abgriff bereitstellenden Abgriffelements 28 einer Abgriff- und Antriebseinrichtung 29 der Rührwelle 20 auf einer Flachseite 30 der Säscheibe 22 abgegriffen wird, wenn sich die Säscheibe 22 dreht. Das Abgriffelement 28 ist bei der gezeigten Ausführungsform hierzu mit einem Reibrad gebildet, dessen umlaufende Oberfläche beim Drehen der Säscheibe 22 auf dieser abrollt, um so die Rührwelle 20 in eine Drehbewegung zu versetzen, so dass die Saatkörner im Aufnahmebereich 25 umgerührt oder umgewälzt werden.

Insbesondere im Aufnahmebereich 25 wird, unter Nutzung der über den Pneumatikanschluss 8 bereitgestellten Luft, für die Saatkornlöcher 24 eine Über- oder Unterdruckumgebung ausgebildet, um so die Saatkörner vereinzelt an den Saatlochkörnern 24 anzulagern, so dass die Saatkörner vereinzelt werden.

Bei den gezeigten Ausführungsformen ist auf der Flachseite 30 der Säscheibe 22 eine Rührscheibe 31 mit Rührvorsprüngen 32 angeordnet, so dass das Abgriffelement 28 nicht in direktem Kontakt mit der Oberfläche der Säscheibe 22 ist, sondern in indirektem Kontakt über die Rührscheibe 31. In einer alternativen Ausgestaltung kann die Rührscheibe 31 entfallen.

Der Abgriff- und Antriebseinrichtung 29 ist eine Anpresseinrichtung 33 zugeordnet, insbesondere dem Abgriffelement 28. Mithilfe der Anpresseinrichtung 33 ist das Abgriffelement 28 federgelagert und wird mithilfe eines Federelements 34, bei dem es sich um eine Spiralfeder handeln kann, gegen die Säscheibe 22 (beziehungsweise die Rührscheibe 31) gedrückt. Eine mittels des Federelements 34 bereitgestellte Federkraft kann einstellbar sein, so dass ein Anpressdruck für das Abgriffelement 28 einstellbar ist.

Die Abgriff- und Antriebseinrichtung 29 ermöglicht es so auch, dass das Reibrad des Abgriffelements 28 auf der Oberfläche der Säscheibe (beziehungsweise der Rührscheibe 31) rutscht, wenn die Drehbewegung der Rührwelle 20 behindert wird, beispielsweise aufgrund einer erhöhten Ansammlung von Saatkörnern im Aufnahmebereich 25.

Die Lage des Abgriffelements 28, also des Reibrads, ist in Bezug auf die Antriebswelle 26 (im mittleren Bereich 27) der Säscheibe 22 in radialer Richtung verlagerbar. Bei der gezeigten Ausführungsform kann hierzu eine Feststellschraube 35 gelöst werden, um das Abgriffelement 28 auf einem Zylinderbauteil 36 in radialer Richtung zu verlagern.

Fig. 4 und 5 zeigen in diesem Zusammenhang eine andere Ausführungsform der Rührwelle 20, bei der das Zylinderbauteil 36 sich auf gegenüberliegenden Seiten in Bezug auf die Antriebswelle 26 der Säscheibe 22 erstreckt, so dass das Antriebselement 28 auf beiden Seiten in Bezug auf die Antriebswelle 26 angeordnet werden kann, was beim Übergang von einer Seite auf die andere Seite eine Umkehr der Drehrichtung für die Rotation der Rührwelle 20 bewirkt.

Die in der vorstehenden Beschreibung, den Ansprüchen sowie der Zeichnung offenbarten Merkmale können sowohl einzeln als auch in beliebiger Kombination für die Verwirklichung der verschiedenen Ausführungen von Bedeutung sein.

## Patentansprüche

1. Säherz (1) für eine Sämaschine, mit
- einem Gehäuse (2);
- einer Antriebswelle (26);
- einer Säscheibe (22) zum Vereinzeln von Saatkörnern, die in dem Gehäuse (2) angeordnet und eine mittels der Antriebswelle (26) angetriebene Rotation ausführen kann, wobei die Säscheibe (22) eine Anordnung von Saatkornlöchern (24) aufweist, die um einen mittleren Scheibenabschnitt (27) der Säscheibe (22), welcher der Antriebswelle (26) gegenüberliegend angeordnet oder mit dieser verbunden ist, im Wesentlichen konzentrisch und zumindest teilweise umlaufend sowie hiervon beabstandet gebildet ist;
- einer Rührwelle (20), die in dem Gehäuse (2) angeordnet ist und eine Anordnung von Rühr- und / oder Förderelementen (21) aufweist, welche beim Rotieren der Säscheibe (22) und der Rührwelle (20) zumindest einen Säscheibenabschnitt mit den Saatkornlöchern und / oder einen Säscheibenabschnitt benachbart zu den Saatkornlöchern erfassen; und
- einer der Rührwelle (20) zugeordnete Abgriff- und Antriebseinrichtung (29), die in dem Gehäuse (2) angeordnet und eingerichtet ist, auf einer Flachseite (30) der Säscheibe (22) in einem Säscheibenabschnitt außerhalb des mittleren Scheibenabschnitts (27) und beabstandet von der Antriebswelle (26) sowie außerhalb eines Säscheibenabschnitts mit der Anordnung von Saatkornlöchern (24) mittels eines Abgriffs eine Antriebskraft an der rotierenden Säscheibe (22) abzugreifen und die Rührwelle (20) mittels der abgegriffenen Antriebskraft zu rotieren;
**dadurch gekennzeichnet, dass**
der Abgriff zum Einstellen einer Rotationsgeschwindigkeit der Rührwelle (20) relativ zur Säscheibe (22) in Bezug auf die Antriebswelle (26) in radialer Richtung verlagerbar ist.

2. Säherz (1) nach Anspruch 1, **dadurch gekennzeichnet, dass** zum Abgreifen der Antriebskraft an der rotierenden Säscheibe (22) eine kraftschlüssige Verbindung zwischen der Säscheibe (22) und der Abgriff- und Antriebseinrichtung (29) ausgebildet ist.

3. Säherz (1) nach Anspruch 2, **dadurch gekennzeichnet, dass** die Abgriff- und Antriebseinrichtung (29) einen Überlastschutz aufweist, derart, dass die kraftschlüssige Verbindung zwischen der Säscheibe (22) und der Abgriff- und Antriebseinrichtung (29) unterbrochen wird, wenn eine der Rotation der Rührwelle (20) entgegenwirkende Gegenkraft eine Schwellwertkraft überschreitet.

4. Säherz (1) nach mindestens einem der vorangehenden Ansprüche, **dadurch gekennzeichnet, dass** die Abgriff- und Antriebseinrichtung (29) ein Reibrad aufweist, welches beim Abgreifen der Antriebskraft an der rotierenden Säscheibe (22) mit dieser reibschlüssig verbunden ist.

5. Säherz (1) nach mindestens einem der vorangehenden Ansprüche, **dadurch gekennzeichnet, dass** der Abgriff mit einem Abgriffelement (28) gebildet ist, wobei dem Abgriffelement (28) eine Anpresseinrichtung (33) zugeordnet ist, die eingerichtet ist, das Abgriffelement (28) mit einem Anpressdruck gegen die Säscheibe (22) zu beaufschlagen.

6. Säherz (1) nach Anspruch 5, **dadurch gekennzeichnet, dass** der Anpressdruck mittels der Anpresseinrichtung (33) einstellbar ist.

7. Säherz (1) nach Anspruch 5 oder 6, **dadurch gekennzeichnet, dass** das Abgriffelement an der Anpresseinrichtung (33) federgelagert aufgenommen ist.

8. Säherz (1) nach mindestens einem der vorangehenden Ansprüche, **dadurch gekennzeichnet, dass** der Abgriff für eine Umkehr einer Rotationsrichtung der Rührwelle (20) in Bezug auf die Antriebswelle (26) in einer ersten Stellung auf einer Seite beabstandet von der Antriebswelle (26) und in einer zweiten Stellung, die von der ersten Stellung verschieden ist, auf einer gegenüberliegenden Seite beabstandet von der Antriebswelle (26) anordenbar ist.

9. Säherz (1) nach mindestens einem der vorangehenden Ansprüche, **dadurch gekennzeichnet, dass** die Anordnung von Rühr- und / oder Förderelementen (21) auf der Rührwelle (20) in axialer Richtung verlagerbar ist.

10. Säherz (1) nach mindestens einem der vorangehenden Ansprüche, **dadurch gekennzeichnet, dass** zwischen der Säscheibe (22) und der Abgriff- und Antriebseinrichtung (29) ein direkter Kontakt ausgebildet ist.

11. Säherz (1) nach mindestens einem der vorangehenden Ansprüche, **dadurch gekennzeichnet, dass** auf der Flachseite (30) der Säscheibe (22) eine Rührscheibe (31) angeordnet ist und zwischen der Säscheibe (22) und der Abgriff- und Antriebseinrichtung (29) ein indirekter Kontakt über die Rührscheibe (31) ausgebildet ist.

12. Säherz (1) nach mindestens einem der vorangehenden Ansprüche, **dadurch gekennzeichnet, dass** die Rührwelle (20) in dem Gehäuse (2) in einem Aufnahmeabschnitt (25) oder benachbart hierzu angeordnet ist, wobei im Aufnahmebereich (25) zum Aufnehmen der Saatkörner an den Saatkornlöchern (24) eine Über- oder Unterdruckumgebung ausgebildet wird.

13. Säherz (1) nach mindestens einem der vorangehenden Ansprüche, **dadurch gekennzeichnet, dass** die Rührwelle (20) in dem Gehäuse (2) austauschbar angeordnet ist.

14. Säherz (1) nach mindestens einem der vorangehenden Ansprüche, **dadurch gekennzeichnet, dass** Rührelemente der Anordnung von Rühr- und / oder Förderelementen (21) wenigstens einer der folgenden Bauarten entsprechend ausgeführt sind: biegesteife Rührelemente und elastisch verformbare Rührelemente.

## Claims

1. A seeding heart (1) for a seed drill, having
- a housing (2);
- a drive shaft (26);
- a seed disc (22) for separating seeds, which is arranged in the housing (2) and can carry out a rotation driven by means of the drive shaft (26), wherein the seed disc (22) has an arrangement of seed holes (24), which is formed substantially concentrically and at least partially circumferentially around and spaced from a central disc section (27) of the seed disc (22), which is arranged opposite the drive shaft (26) or is connected thereto;
- an agitator shaft (20), which is arranged in the housing (2) and has an arrangement of agitating and/or conveying elements (21), which, when the seed disc (22) and the agitator shaft (20) are rotated, engage at least one seed disc section with the seed holes and/or one seed disc section adjacent to the seed holes; and
- a pick-up and drive device (29) associated with the agitator shaft (20) which is arranged in the housing (2) and configured to, on a flat side (30) of the seed disc (22) in a seed disc section outside the central disc section (27) and at a distance from the drive shaft (26) and outside a seed disc section with the arrangement of seed holes (24), pick up a drive force at the rotating seed disc (22) by means of a pick-up mechanism and to rotate the agitator shaft (20) by means of the picked-up drive force;
**characterized in that**
the pick-up mechanism can be displaced in a radial direction for adjusting a rotational speed of the agitator shaft (20) relative to the seed disc (22) in relation to the drive shaft (26).

2. The seeding heart (1) according to Claim 1, **characterized in that**, for picking up the drive force at the rotating seed disc (22), a force-fit connection is formed between the seed disc (22) and the pick-up and drive device (29).

3. The seeding heart (1) according to Claim 2, **characterized in that** the pick-up and drive device (29) has an overload protection such that the force-fit connection between the seed disc (22) and the pick-up and drive device (29) is interrupted if a counterforce acting against the rotation of the agitator shaft (20) exceeds a threshold force.

4. The seeding heart (1) according to one of the preceding claims, **characterized in that** the pick-up and drive device (29) has a friction wheel, which is connected in a friction-locked manner to the rotating seed disc (22) when the drive force is picked up.

5. The seeding heart (1) according to one of the preceding claims, **characterized in that** the pick-up mechanism is formed with a pick-up element (28), wherein a contact pressure device (33) is associated with the pick-up element (28), which contact pressure device (33) is configured to apply a contact pressure to the pick-up element (28) against the seed disc (22).

6. The seeding heart (1) according to Claim 5, **characterized in that** the contact pressure can be adjusted by means of the contact pressure device (33).

7. The seeding heart (1) according to Claim 5 or 6, **characterized in that** the pick-up element is spring-mounted on the contact pressure device (33).

8. The seeding heart (1) according to at least one of the preceding claims, **characterized in that**, to reverse a rotational direction of the agitator shaft (20) relative to the drive shaft (26), the pick-up mechanism can be arranged in a first position on a side spaced apart from the drive shaft (26) and in a second position, which is different from the first position, on an opposite side spaced apart from the drive shaft (26).

9. The seeding heart (1) according to one of the preceding claims, **characterized in that** the arrangement of agitating and/or conveying elements (21) can be displaced in an axial direction on the agitator shaft (20).

10. The seeding heart (1) according to one of the preceding claims, **characterized in that** a direct contact is formed between the seed disc (22) and the pick-up and drive device (29).

11. The seeding heart (1) according to one of the preceding claims, **characterized in that** an agitating disc (31) is arranged on the flat side (30) of the seed disc (22) and an indirect contact is formed between the seed disc (22) and the pick-up and drive device (29) via the agitating disc (31).

12. The seeding heart (1) according to at least one of the preceding claims, **characterized in that** the agitator shaft (20) is arranged in the housing (2) in a receiving section (25) or adjacent thereto, wherein a positive or negative pressure environment is formed in the receiving region (25) for receiving the seeds at the seed holes (24).

13. The seeding heart (1) according to at least one of the preceding claims, **characterized in that** the agitator shaft (20) is arranged in the housing (2) in a replaceable manner.

14. The seeding heart (1) according to at least one of the preceding claims, **characterized in that** the agitating elements of the arrangement of agitating and/or conveying elements (21) are designed in accordance with at least one of the following designs: rigid agitating elements and elastically deformable agitating elements.

## Revendications

1. Distributeur de semences (1) pour un semoir, comprenant
- un carter (2);
- un arbre d'entraînement (26) ;
- un disque d'ensemencement (22), destiné à désolidariser des graines, qui est placé dans le carter (2) et qui est susceptible d'effectuer une rotation entraînée au moyen de l'arbre d'entraînement (26), le disque d'ensemencement (22) comportant un agencement d'orifices pour graines (24), qui sont constitués autour d'une partie centrale (27) de disque du disque d'ensemencement (22), laquelle est placée au vis-à-vis de l'arbre d'entraînement (26) ou est assemblée avec celui-ci, de manière sensiblement concentrique et au moins partiellement périphérique et avec un écart par rapport à celui-ci ;
- un arbre agitateur (20), qui est placé dans la carter (2) et qui comporte un agencement d'éléments agitateurs et / ou transporteurs (21), lesquels lors de la rotation du disque d'ensemencement (22) et de l'arbre agitateur (20) saisissent au moins une partie du disque d'ensemencement pourvue des orifices pour graines et / ou une partie du disque d'ensemencement au voisinage des orifices pour graines ; et
- un système de prélèvement et d'entraînement (29) associé à l'arbre agitateur (20), qui est placé dans le carter (2) et qui est configuré pour prélever au moyen d'une prise sur un côté plat (30) du disque d'ensemencement (22) dans une partie du disque d'ensemencement extérieure à la partie centrale (27) de disque et avec un écart par rapport à l'arbre d'entraînement (26), ainsi qu'à l'extérieur d'une partie de disque d'ensemencement pourvue de l'agencement d'orifices pour graines (24) une force d'entraînement sur le disque d'ensemencement (22) en rotation et pour faire tourner l'arbre agitateur (20) au moyen de la force d'entraînement prélevée ;
**caractérisé en ce que**
la prise est déplaçable en direction radiale par rapport à l'arbre d'entraînement (26), pour régler une vitesse de rotation de l'arbre agitateur (20) relativement au disque d'ensemencement (22).

2. Distributeur de semences (1) selon la revendication 1, **caractérisé en ce que** pour prélever la force d'entraînement sur le disque d'ensemencement (22) en rotation, un assemblage par complémentarité de force est réalisé entre le disque d'ensemencement (22) et le système de prélèvement et d'entraînement (29).

3. Distributeur de semences (1) selon la revendication 2, **caractérisé en ce que** le système de prélèvement et d'entraînement (29) comporte une protection contre les surcharges, de telle sorte que l'assemblage par complémentarité de force entre le disque d'ensemencement (22) et le système de prélèvement et d'entraînement (29) soit interrompu lorsqu'une force antagoniste agissant à l'encontre de la rotation de l'arbre agitateur (20) dépasse une force de valeur seuil.

4. Distributeur de semences (1) selon au moins l'une quelconque des revendications précédentes, **caractérisé en ce que** le système de prélèvement et d'entraînement (29) comporte une roue de friction, laquelle est assemblée par friction avec celui-ci, lors du prélèvement de la force de rotation sur le disque d'ensemencement (22) en rotation.

5. Distributeur de semences (1) selon au moins l'une quelconque des revendications précédentes, **caractérisé en ce que** la prise est réalisée avec un élément de prise (28), à l'élément de prise (28) étant associé un système presseur (33) qui est configuré pour solliciter l'élément de prise (28) avec une pression de contact contre le disque d'ensemencement (22).

6. Distributeur de semences (1) selon la revendication 5, **caractérisé en ce que** la pression de contact est réglable au moyen du système presseur (33).

7. Distributeur de semences (1) selon la revendication 5 ou 6, **caractérisé en ce que** l'élément de prise est réceptionné en étant logé sur ressort sur le système presseur (33).

8. Distributeur de semences (1) selon au moins l'une quelconque des revendications précédentes, **caractérisé en ce que** pour une inversion d'une direction de rotation de l'arbre agitateur (20) en rapport à l'arbre d'entraînement (26), la prise est susceptible d'être placée dans une première position sur un côté, avec un écart par rapport à l'arbre d'entraînement (26) et dans une deuxième position, qui est différente de la première position, sur un côté au vis-à-vis, avec un écart par rapport à l'arbre d'entraînement (26).

9. Distributeur de semences (1) selon au moins l'une quelconque des revendications précédentes, **caractérisé en ce que** l'agencement d'éléments agitateurs et / ou de transport (21) est déplaçable en direction axiale sur l'arbre agitateur (20).

10. Distributeur de semences (1) selon au moins l'une quelconque des revendications précédentes, **caractérisé en ce qu'**entre le disque d'ensemencement (22) et le système de prélèvement et d'entraînement (29) est réalisé un contact direct.

11. Distributeur de semences (1) selon au moins l'une quelconque des revendications précédentes, **caractérisé en ce que** sur le côté plat (30) du disque d'ensemencement (22) est placé un disque agitateur (31) et entre le disque d'ensemencement (22) et le système de prélèvement et d'entraînement (29) est réalisé un contact indirect par l'intermédiaire du disque agitateur (31).

12. Distributeur de semences (1) selon au moins l'une quelconque des revendications précédentes, **caractérisé en ce que** l'arbre agitateur (20) est placé dans le carter (2) dans une partie de logement (25) ou au voisinage de celle-ci, dans la zone de logement (25) destinée à recevoir les graines, une surpression ou une dépression étant créée sur les orifices pour graines (24).

13. Distributeur de semences (1) selon au moins l'une quelconque des revendications précédentes, **caractérisé en ce que** l'arbre agitateur (20) est placé de manière interchangeable dans le carter (2).

14. Distributeur de semences (1) selon au moins l'une quelconque des revendications précédentes, **caractérisé en ce que** des éléments agitateurs de l'agencement d'éléments agitateurs et / ou de transport (21) sont réalisés en conformité avec au moins l'un des types suivants : éléments agitateurs rigides en flexion et éléments agitateurs élastiquement déformables.
